# EUROPÄISCHE PATENTSCHRIFT

(11) **EP 0 452 949 B1**
(45) Veröffentlichungstag und Bekanntmachung des Hinweises auf die Patenterteilung: **13.09.1995**
(21) Anmeldenummer: 91106321.2
(22) Anmeldetag: 19.04.1991
(51) Int. Cl.: H04B 10/10

(54) **Infrarot-Steuersendegerät**
Control apparatus for transmitting I.R.
Appareil de commande pour émetteur I.R.

(30) Priorität: 20.04.1990 DE 9004512 U
(43) Veröffentlichungstag der Anmeldung: 23.10.1991
(73) Patentinhaber: Brähler, Helmut, D-53639 Königswinter (DE)
(72) Erfinder: Brähler, Helmut, D-53639 Königswinter (DE)
(74) Vertreter: Turi, Michael, Dipl.-Phys.

(56) Entgegenhaltungen:
- GB-A- 2 151 870
- GB-A- 2 218 874
- US-A- 4 882 776

## Beschreibung

Die Erfindung betrifft ein Steuersendegerät für die mehrkanalige Übertragung von Ton mittels Infrarotlicht, mit einem Gehäuse, mit einem Ausgangsanschluß an dem Gehäuse für den Anschluß eines Verbindungskabels zu mindestens einem Infrarot-Leistungsstrahler, und mit einem Bedienfeld an einer Seite des Gehäuses, das mehrere Einstellelemente für die Beeinflussung des in den einzelnen Ton-Kanälen übertragenen Tones aufweist.

Derartige Steuersendegeräte werden z. B. in Dolmetscher- oder Führungsanlagen verwendet, um Ton-Information in mehreren Sprachen drahtlos mittels Infrarotlicht an die Teilnehmer einer Konferenz oder die Besucher eines Museums zu übertragen. Eine derartige Anlage ist im Dokument GB-A-2151870 offenbart. Das Steuersendegerät erhält mehrere Ton-Signale und setzt diese in ein moduliertes Sendesignal am Ausgangsanschluß um, mit welchem ein oder mehrere Infrarot-Leistungsstrahler angesteuert werden, die über Verbindungskabel an den Ausgangsanschluß angeschlossen sind. Die Infrarot-Leistungsstrahler, die hierzu eine Anordnung von vielen Infrarot-Sendedioden umfassen, strahlen entsprechend moduliertes Infrarotlicht ab, das mit kleinen Infrarot-Empfängern empfangen werden kann, die von den Konferenzteilnehmern oder Museumsbesuchern mit sich getragen werden. In den Infrarot-Empfängern werden das Infrarotlicht demoduliert und die den mehreren Ton-Kanälen entsprechenden Ton-Signale zurückgewonnen, wobei der Benutzer durch einen Wahlschalter festlegt, welchen Ton-Kanal bzw. welche Sprache er abhören will.

Die Infrarot-Leistungsstrahler sind in dem mit Ton-Information zu versorgenden Raum so angeordnet, daß im genutzten Teil des Raumes möglichst überall ein gleichförmiges Infrarotlicht-Feld vorherrscht. Das Steuersendegerät wird von einem Techniker bedient und überwacht. Es steht gewöhnlich außerhalb des öffentlich genutzten Teils des Raumes im Schatten der Infrarot-Leistungsstrahler, z. B. in einer Raumecke. Dies hat zur Folge, daß der am Steuersendegerät tätige Techniker das abgestrahlte Infrarotlicht nicht oder nur schlecht empfangen kann und somit am Steuersendegerät keine vollständige Kontrolle über die richtige Wirkungsweise des Steuersendegerätes hat. Es ist ihm zwar möglich, die dem Steuersendegerät zugeführten Ton-Signale z. B. mit einem Kopfhörer abzuhören; er weiß damit aber nicht, ob die Einstellelemente für die Beeinflussung des in den einzelnen Ton-Kanälen übertragenen Tones richtig eingestellt sind und das modulierte Sendesignal richtig und vollständig gebildet wird.

Zur Vermeidung dieses Nachteils ist bei einem Infrarot-Steuersendegerät der eingangs genannten Art erfindungsgemäß außen an dem Gehäuse im Bereich des Bedienfeldes eine Gruppe von einigen Infrarot-Sendedioden vorgesehen, die elektrisch mit dem Ausgangsanschluß verbunden sind.

Bei dem erfindungsgemäßen Steuersendegerät erzeugt die Gruppe von einigen Infrarot-Sendedioden ein kleines Infrarotlicht-Feld in unmittelbarer Umgebung des Steuersendegerätes, das die gleiche Information wie das von den Infrarot-Leistungsstrahlern erzeugte Hauptfeld vermittelt, da die Gruppe von einigen Infrarot-Sendedioden mit dem gleichen Sendesignal vom Ausgangsanschluß des Steuersendegerätes wie die Infrarot-Leistungsstrahler angesteuert werden. Das kleine Feld in der Umgebung des Steuersendegerätes kann vom bedienenden Techniker mit Hilfe des üblichen Infrarot-Empfängers drahtlos empfangen und abgehört werden, so daß ihm eine vollständige Kontrolle über die Arbeitsweise des Steuersendegerätes möglich ist. Dabei kann er sich frei bewegen und sich auch einmal vom Steuersendegerät entfernen, ohne die Kontrolle zu verlieren, weil er dann das von den Infrarot-Leistungsstrahlern erzeugte Hauptfeld empfängt. Die Reichweite des am Steuersendegerät erzeugten Infrarot-Feldes hängt von der Zahl der am Steuersendegerät vorgesehenen Infrarot-Sendedioden ab. Normalerweise wird man mit einer Reichweite von 1,5 bis 2,0 m auskommen, wozu, je nach Leistung der einzelnen Infrarot-Sendedioden, eine Gruppe aus zwei bis fünf Infrarot-Sendedioden notwendig ist.

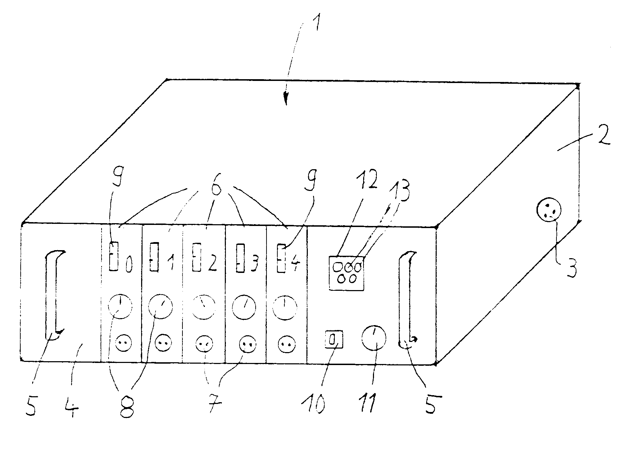

Im folgenden ist die Erfindung mit weiteren vorteilhaften Einzelheiten anhand eines schematisch dargestellten Ausführungsbeispiels näher erläutert. Die einzige Figur zeigt ein Infrarot-Sternersendegerät in isometrischer Ansicht.

Das in der Figur dargestellte Steuersendegerät ist für die mehrkanalige Übertragung von Ton mittels Infrarotlicht bestimmt. Es umfaßt ein Gehäuse 1, in dessen einer Seitenwand 2 ein elektrischer Ausgangsanschluß 3 für den Anschluß eines nicht dargestellten Verbindungskabels vorgesehen ist, das zu mindestens einem Infrarot-Leistungsstrahler üblicher Bauweise führt.

Die Vorderseite des Gehäuses 1 ist als Bedienfeld 4 ausgestaltet. Links und rechts ist je ein Traggriff 5 für den Transport vorgesehen. Dazwischen befinden sich fünf Einschübe 6, die jeweils einem Ton-Kanal zugeordnet sind, und zwar der Einschub mit der Bezeichnung 0 dem Ton-Kanal mit dem Originalton und die Einschübe mit der Bezeichnung 1 bis 4 den Ton-Kanälen mit Übersetzungen des Originaltons in verschiedene Sprachen. Jeder Einschub 6 hat einen Steckanschluß 7 für die Zuführung eines entsprechenden Ton-Signales, einen Drehknopf 8 als Einstellelement für den Ton-Pegel und einen Pegel-Messer 9.

In einem neben den Einschüben befindlichen Abschnitt des Bedienfeldes 4 befindet sich ein Netzschalter 10 für das gesamte Steuersendegerät und ein Drehknopf 11 als Einstellelement für den Pegel des am Ausgangsanschluß 3 anstehenden Sendesignales, das durch Modulierung entsprechender Träger mit den den Eingangsanschlüssen 7 zugeführten Ton-Signalen und Zusammenfassung derselben gebildet wird.

Über dem Netzschalter 10 und dem Einstellelement 11 ist im Bedienfeld eine Gruppe 12 aus fünf Infrarot-Sendedioden 13 angebracht. Bei den Infrarot-Sendedioden 13 handelt es sich um übliche LED's, wie sie auch in den Infrarot-Leistungsstrahlern Verwendung finden. Ihre Anordnung ist so getroffen, daß das von ihnen erzeugte Infrarot-Licht vom Bedienfeld weg nach vorne abstrahlt. Die Gruppe 12 von Infrarot-Sendedioden ist elektrisch mit dem Ausgangsanschluß 3 verbunden und enthält von diesem das Sendesignal des Steuersendegerätes. Demzufolge erzeugt die Gruppe 12 ein kleines Infrarotlicht-Feld vor dem Steuersendegerät, das die Ton-Information der übertragenen Ton-Kanäle enthält und mit einem üblichen, mehrkanaligen Infrarot-Empfänger empfangen und abgehört werden kann.

## Patentansprüche

1. Steuersendegerät für die mehrkanalige Übertragung von Ton mittels Infrarotlicht, mit einem Gehäuse (1), mit einem Ausgangsanschluß (3) an dem Gehäuse (1) für den Anschlup eines Verbindungskabels zu mindestens einem Infrarot-Leistungsstrahler, und mit einem Bedienfeld (4) an einer Seite des Gehäuses (1), das mehrere Einstellelemente (8; 11) für die Beeinflussung des in den einzelnen Ton-Kanälen übertragenen Tons aufweist, dadurch gekennzeichnet,
daß außen an dem Gehäuse (1) im Bereich des Bedienfeldes (4) wenigstens eine bzw. eine Gruppe (12) von einigen Infrarot-Sendedioden (13) vorgesehen ist, die elektrisch mit dem Ausgangsanschluß (3) verbunden sind.

## Claims

1. Control transmitter device for the multi-channel transmission of sound by means of infrared light, with a housing (1), with an output terminal (3) on the housing (1) for the connection of a connecting cable to at least one power infrared source, and with a control panel (4) on one side of the housing (1) which comprises several adjusting elements (8; 11) for influencing the sound transmitted in the individual sound channels, characterised in that on the outside of the housing (1) in the region of the control panel (4) is provided at least one or one group (12) of a few infrared transmitter diodes (13) which are electrically connected to the output terminal (3).

## Revendications

1. Appareil de commande pour émetteur pour la transmission multicanaux de son au moyen de lumière infrarouge, équipé d'un boîtier (1), d'un branchement de sortie (3) sur le boîtier (1) pour le raccordement d'un câble de liaison avec au moins un émetteur de rayonnement infrarouge de puissance et d'un tableau de commande (4) sur un côté du boîtier (1), qui présente plusieurs éléments de réglage (8; 11) pour influer sur le son transmis dans les différents canaux audio, caractérisé en ce qu'à l'extérieur sur le boîtier (1), dans la zone du tableau de commande (4), est prévu un groupe (12) de quelques diodes émettrices I.F.(13) qui sont reliées électriquement au branchement de sortie (3).
